# EUROPEAN PATENT SPECIFICATION

(11) **EP 0 549 869 B1**
(45) Date of publication and mention of the grant of the patent: **15.01.1997**
(21) Application number: 92118788.6
(22) Date of filing: 02.11.1992
(51) Int. Cl.: B29D 30/34, B60C 9/02

(54) **Method of producing a toroidal road vehicle tire carcass, and carcass produced thereby**
Verfahren zum Herstellen einer torusförmigen Reifenkarkasse und damit hergestellte Karkasse
Procédé de fabrication d'une carcasse toroidale de pneu et carcasse ainsi fabriquée

(30) Priority: 30.12.1991 IT TO911050
(43) Date of publication of application: 07.07.1993
(73) Proprietor: BRIDGESTONE CORPORATION, Tokyo 104 (JP)
(72) Inventor: Siegenthaler, Karl J., I-00100 Roma, Ostia (IT)
(74) Representative: Jorio, Paolo

(56) References cited:
- EP-A- 0 009 018
- EP-A- 0 489 353
- FR-A- 410 370
- FR-A- 457 440
- FR-A- 2 132 509
- FR-A- 2 337 033
- * IT-A-1162853

## Description

The present invention relates to a method of producing a toroidal road vehicle tire carcass.

In general, radial tires comprise a radial carcass in turn comprising two annular beads and a toroidal reticulated structure connecting the beads to each other. The noted reticulated structure is normally defined by a number of elongated reinforcing elements connecting the beads and extending substantially radially in relation thereto.

The above elongated reinforcing elements normally consist of the reinforcing wires or cords of a ply that is arranged, at the beginning, on a cylindrical surface to define e tube, on which the two beads are mounted so that an intermediate portion of the tube extends between the beads themselves, and two end portions of the tube extend outside the respective beads. Then the noted end portions are turned up about the relevant beads and, at the same time, the beads are moved toward one another to shape the ply to a substantially toroidal carcass.

In general, as disclosed in Italian Patent No. 1162853, very expensive machinery is needed to turn up the end portions of the tubular ply about the beads, and to move the beads toward one another to shape the intermediate portion of the carcass; and the above machinery highly affects the manufacturing costs of a radial carcass.

It is an object of the present invention to lower the above manufacturing costs by providing a straightforward, low-cost method of producing a toroidal radial tire carcass.

According to the present invention, there is provided a method of producing a toroidal road vehicle tire carcass comprising two annular beads, and a toroidal reticulated structure connecting the two beads and comprising a number of elongated reinforcing elements between and extending substantially radially in relation to the beads; said method being characterized by the fact that said elongated reinforcing elements are formed using at least one continuous cord wound into a first and second continuous series of oppositely-oriented U-shaped loops, and by connecting the loops in said two series in such a manner as to weave a substantially tubular said toroidal reticulated structure enclosing the two beads.

The above method preferably comprises an initial stage consisting in forming a supporting frame for the carcass; said frame comprising an inner portion defined by the two beads and forming the skeleton of the carcass; and a removable auxiliary outer portion between and radially outwards in relation to the beads; said reticulated structure being woven about the two beads and outside the auxiliary outer portion.

According to a preferred embodiment of the above method, the loops in said two series are connected by inserting each loop in each series through a respective loop in the other series. In particular, each loop is preferably formed by inserting an intermediate U-shaped cord portion through a respective loop formed from another intermediate cord portion, so as to form a link between said two loops and produce a "bouclé" type reticulated structure.

The present invention also relates to a carcass formed using the above method.

According to the present invention, there is provided a toroidal road vehicle tire carcass comprising two annular beads, and a reticulated structure connecting the two beads and in turn comprising a number of reinforcing elements extending between and substantially radially in relation to the beads; characterized by the fact that said elongated reinforcing elements are formed from at least one continuous cord wound into a first and second continuous series of oppositely-oriented U-shaped loops, each connected to a respective loop in the other series to weave a substantially tubular said toroidal reticulated structure enclosing the two beads.

A non-limiting embodiment of the present invention will be described by way of example with reference to the accompanying drawings, in which:
Fig.1 shows a schematic view in perspective of a portion of a preferred embodiment of the carcass according to the present invention;
Fig.2 shows a plan view of the carcass portion in Fig.1.

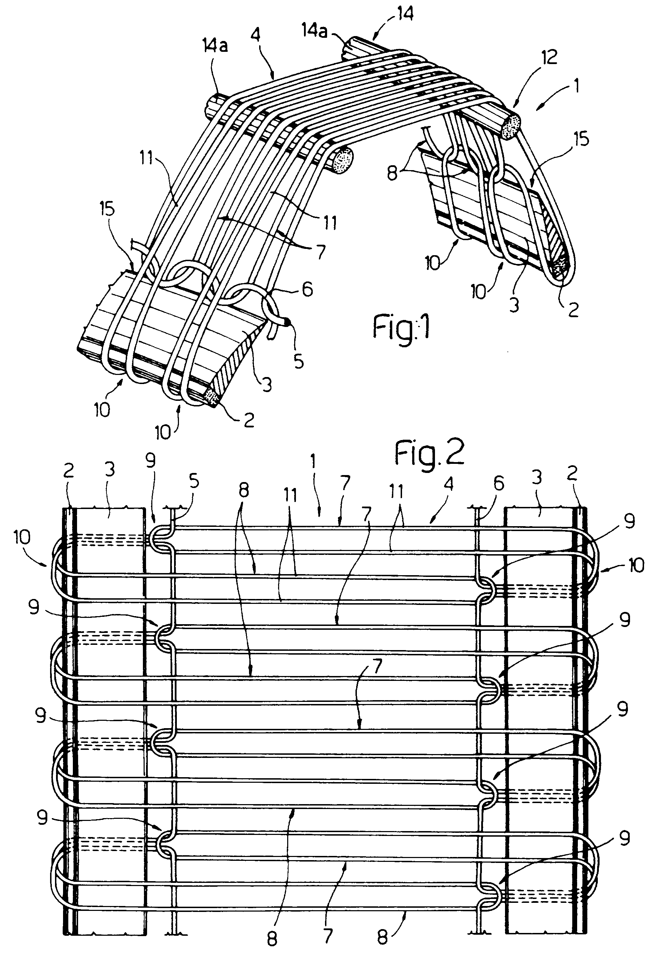

Number 1 in Fig.1 indicates a toroidal road vehicle tire carcass.

Carcass 1 comprises two annular beads 2 with respective bead fillers 3; and a toroidal reticulated structure 4 connecting beads 2 and in turn comprising a number of reinforcing elements extending between and substantially radially in relation to beads 2.

In the example shown, said reinforcing elements are formed from a first and second continuous cord, 5 and 6, wound so as to form a first and second continuous series of oppositely-oriented U-shaped loops 7 and 8.

According to a variation not shown, cords 5 and 6 are connected to form a single continuous cord. Alternatively, according to further variations not shown, the carcass may be divided into a number of sectors, each formed using one or two cords.

Each loop 7,8 is linked at 9 to a respective loop 8, 7 in the other series, to weave a substantially tubular structure 4 enclosing beads 2. Each link 9 in loops 7 and 8 is located along the inner surface of reticulated structure 4, close to respective bead 2, and is formed by inserting one of loops 7, 8 through the other loop 8, 7, so as to form a so-called "bouclé" structure 4.

Each loop 7, 8 comprises a first portion 10 extending from link 9 about adjacent bead 2, and having two substantially parallel branches; and a second U-shaped end portion 11 wound towards the other bead 2.

Carcass 1 as described above is formed on a supporting frame 12 comprising an inner portion 13 defined by beads 2 and forming the skeleton of carcass 1; and a removable auxiliary outer portion 14 defined by two rings 14a, each consisting of a number of curved segments connected in releasable manner (not shown). Portion 14 is located between and radially outwards in relation to beads 2, so as to define, with beads 2, two annular openings 15.

During the formation of structure 4, frame 12 is preferably rotated about its axis, and structure 4 is woven about beads 2 and outside portion 14. In particular, as already stated, links 9 are arranged along the inner surface of structure 4, and the first portion 10 of each loop 7, 8 extends from a respective link 9 and is wound outwards about a respective adjacent first bead 2, while the second portion 11 is wound towards the second bead 2, outside portion 14, and through the opening 15 adjacent to second bead 2, up to a further link 9 adjacent to second bead 2.

Each of loops 7 and 8 is therefore wound about a respective 2, extends over the outside of frame 12 and through opening 15 opposite respective bead 2 in relation to portion 14, so as to produce a woven tubular structure 4 enclosing beads 2.

In connection with the above, it should be pointed out that, as with any bouclé structure, each loop 7, 8 is produced by winding an intermediate portion of cord into a U. In other words, structure 4 may be produced using one cord 5, 6 with one free end, and by winding a first intermediate portion of said cord 5, 6 in a U to produce a first loop 7, 8, and then winding further intermediate portions of cord 5, 6 into further loops 7, 8 on the opposite side of said first intermediate portion in relation to said free end. That is, structure 4 may be produced from a so-called "infinite" cord 5, 6, e.g. a cord 5, 6 produced continuously, as it is used up, by a die (not shown) adjacent to frame 12.

## Claims

1. A method of producing a toroidal road vehicle tire carcass (1) comprising two annular beads (2), and a toroidal reticulated structure (4) connecting the two beads (2) and comprising a number of elongated reinforcing elements between and extending substantially radially in relation to the beads (2); said method being characterized by the fact that said elongated reinforcing elements are formed using at least one continuous cord (5, 6) wound into a first and second continuous series of oppositely-oriented U-shaped loops (7, 8), and by connecting the loops (7, 8) in said two series in such a manner as to weave a substantially tubular said toroidal reticulated structure (4) enclosing the two beads (2).

2. A method as claimed in Claim 1, characterized by the fact that two continuous cords (5, 6) are employed; each said continuous series of loops (7, 8) being produced by winding a respective said continuous cord (5, 6).

3. A method as claimed in Claim 1 or 2, characterized by the fact that it comprises an initial stage consisting in forming a frame (12) supporting said carcass (1); said frame (12) comprising an inner portion (13) defined by the two beads (2) and forming the skeleton of said carcass (1), and a removable auxiliary outer portion (14) between and radially outwards in relation to the beads (2); said reticulated structure (4) being woven about the two beads (2) and outside said auxiliary outer portion (14).

4. A method as claimed in Claim 3, characterized by the fact that the loops (7, 8) in said two series are connected by inserting each loop (7, 8) in each series through a respective loop (8, 7) in the other series.

5. A method as claimed in Claim 4, characterized by the fact that each loop (7, 8) is formed by inserting an intermediate U-shaped portion of cord (5, 6) through a respective loop (8, 7) formed from a further intermediate portion of cord (5, 6), so as to form a link (9) between said two loops (7, 8) and produce a "bouclé" type reticulated structure (4).

6. A method as claimed in Claim 5, characterized by the fact that each said link (9) is formed inside said frame (12).

7. A method as claimed in Claim 6, characterized by the fact that each said link (9) is formed close to a respective said bead (2).

8. A method as claimed in any one of the foregoing Claims from 3 to 7, characterized by the fact that said inner (13) and outer (14) portions define two annular openings (15); each said loop (7, 8) comprising a first (10) and second (11) portion; said first portion (10) comprising two substantially parallel branches, and being wound, as of a respective loop (8, 7) in the other series, outwards about a respective bead (2) and outside one of said openings (15); said second portion (11) being a U-shaped end portion, which is wound towards the other bead (2) and through the other said opening (15).

9. A toroidal road vehicle tire carcass (1) comprising two annular beads (2), and a reticulated structure (4) connecting the two beads (2) and in turn comprising a number of reinforcing elements extending between and substantially radially in relation to the beads (2); characterized by the fact that said elongated reinforcing elements are formed from at least one continuous cord (5, 6) wound into a first and second continuous series of oppositely-oriented U-shaped loops (7, 8), each connected to a respective loop (7, 8) in the other series to weave a substantially tubular said toroidal reticulated structure (4) enclosing the two beads (2).

10. A carcass as claimed in Claim 9, characterized by the fact that said elongated reinforcing elements are formed from at least two continuous cords, each wound into a respective said continuous series of loops (7, 8).

11. A carcass as claimed in Claim 9 or 10, characterized by the fact that each loop (7, 8) in each series is inserted through a respective loop (8, 7) in the other series.

12. A carcass as claimed in Claim 11, characterized by the fact that said reticulated structure (4) is a "bouclé" type structure; each loop (7, 8) being defined by an intermediate U-shaped portion of cord (5, 6) and extending through a respective loop (8, 7) defined by a further intermediate portion of cord (5, 6), so as to form a link (9) between said two loops (7, 8).

13. A carcass as claimed in Claim 12, characterized by the fact that each said link (9) is located along the inner surface of said reticulated structure (4).

14. A carcass as claimed in Claim 12 or 13, characterized by the fact that each said link (9) is located close to a respective said bead (2).

## Patentansprüche

1. Verfahren zur Herstellung einer torusförmigen Straßenfahrzeug-Reifenkarkasse (1) mit zwei ringförmigen Wülsten (2) und einer torusförmigen, netzartigen Struktur (4), die die beiden Wülste (2) verbindet und eine Anzahl länglicher Verstärkungselemente aufweist, die zwischen den Wülsten (2) liegen und sich relativ zu diesen im wesentlichen radial erstrecken; wobei das genannte Verfahren dadurch **gekennzeichnet** ist, daß die genannten länglichen Verstärkungselemente unter Verwendung mindestens eines durchgehenden Cordfadens (5, 6) gebildet sind, der zu einer ersten und zweiten, kontinuierlichen Serie entgegengesetzt gerichteter, U-förmiger Schlaufen (7, 8) gewunden ist, und dadurch, daß man die Schlaufen (7, 8) in den genannten beiden Serien auf eine solche Weise verbindet, daß man eine genannte, im wesentlichen schlauchförmige, torusförmige, netzartige Struktur (4) webt, die die beiden Wülste (2) einschließt.

2. Verfahren wie beansprucht in Anspruch 1, dadurch **gekennzeichnet,** daß zwei durchgehende Cordfäden (5, 6) verwendet werden, wobei jede der genannten durchgehenden Serien von Schlaufen (7, 8) dadurch erzeugt wird, daß man einen jeweiligen der genannten durchgehenden Cordfäden (5, 6) windet.

3. Verfahren wie beansprucht in Anspruch 1 oder 2, dadurch **gekennzeichnet,** daß es ein Anfangsstadium aufweist, das darin besteht, einen Rahmen (12) zu bilden, der die genannte Karkasse (1) abstützt, wobei der genannte Rahmen (12) einen inneren Abschnitt (13) aufweist, der von den beiden Wülsten (2) gebildet ist und das Skelett der genannten Karkasse (1) bildet, und einen abnehmbaren äußeren Hilfsabschnitt (14) zwischen den Wülsten (2) und relativ zu diesen radial außerhalb; und wobei die genannte netzartige Struktur (4) rund um die beiden Wülste (2) und außerhalb des genannten äußeren Hilfsabschnitts (14) gewebt wird.

4. Verfahren wie beansprucht in Anspruch 3, dadurch **gekennzeichnet,** daß die Schlaufen (7, 8) in den genannten beiden Serien dadurch verbunden werden, daß man jede Schlaufe (7, 8) in jeder Serie durch eine jeweilige Schlaufe (8, 7) in der anderen Serie einführt.

5. Verfahren wie beansprucht in Anspruch 4, dadurch **gekennzeichnet,** daß jede Schlaufe (7, 8) dadurch gebildet ist, daß man einen U-förmigen Zwischenabschnitt aus Cordfaden (5, 6) durch eine jeweilige Schlaufe (8, 7) einführt, die aus einem weiteren Zwischenabschnitt aus Cordfaden (5, 6) gebildet ist, um eine Verbindungsstelle (9) Zwischen den beiden genannten Schlaufen (7, 8) zu bilden und eine "Bouclé"-artige, netzartige Struktur (4) zu erzeugen.

6. Verfahren wie beansprucht in Anspruch 5, dadurch **gekennzeichnet,** daß jede genannte Verbindungsstelle (9) im Inneren des genannten Rahmens (12) gebildet ist.

7. Verfahren wie beansprucht in Anspruch 6, dadurch **gekennzeichnet,** daß jede genannte Verbindungsstelle (9) nahe einem jeweiligen genannten Wulst (2) gebildet ist.

8. Verfahren wie beansprucht in irgendeinem der vorangehenden Ansprüche von 3 bis 7, dadurch **gekennzeichnet,** daß der genannte innere (13) und äußere (14) Abschnitt zwei ringförmige Öffnungen (15) festlegen; wobei jede genannte Schlaufe (7, 8) einen ersten (10) und zweiten (11) Abschnitt aufweist; der genannte erste Abschnitt (10) Zwei im wesentlichen parallele Zweige aufweist und, wie bei einer jeweiligen Schlaufe (8, 7) in der anderen Serie, außerhalb um eine jeweilige Wulst (2) und außerhalb einer der genannten Öffnungen (15) herumgewunden ist; und der genannte zweite Abschnitt (11) ein U-förmiger Endabschnitt ist, der zur anderen Wulst (2) hin und durch die andere genannte Öffnung (15) hindurch gewunden ist.

9. Torusförmige Straßenfahrzeug-Reifenkarkasse (1) mit zwei ringförmigen Wülsten (2) und einer netzartigen Struktur (4), die die beiden Wülste (2) verbindet und ihrerseits eine Anzahl von Verstärkungselementen aufweist, die sich zwischen den Wülsten (2) und relativ zu diesen im wesentlichen radial erstrecken; dadurch **gekennzeichnet,** daß die genannten länglichen Verstärkungselemente aus mindestens einem durchgehenden Cordfaden (5, 6) gebildet sind, der zu einer ersten und einer zweiten durchgehenden Serie entgegengesetzt ausgerichteter, U-förmiger Schlaufen (7, 8) gewunden ist, die jeweils mit einer entsprechenden Schlaufe (7, 8) in der anderen Serie verbunden sind, um eine genannte, im wesentlichen schlauchförmige, torusförmige, netzartige Struktur (4) zu weben, die die beiden Wülste (2) umschließt.

10. Karkasse wie beansprucht in Anspruch 9, dadurch **gekennzeichnet,** daß die genannten länglichen Verstärkungselemente aus mindestens zwei durchgehenden Cordfäden gebildet sind, von denen jeder in eine entsprechende genannte durchgehende Serie von Schlaufen (7, 8) hineingewunden ist.

11. Karkasse wie beansprucht in Anspruch 9 oder 10, dadurch **gekennzeichnet,** daß jede Schlaufe (7, 8) in jeder Serie durch eine jeweilge Schlaufe (8, 7) in der anderen Serie eingeführt wird.

12. Karkasse wie beansprucht in Anspruch 11, dadurch **gekennzeichnet,** daß die genannte netzartige Struktur (4) eine "Bouclé"-artige Struktur ist; wobei jede Schlaufe (7, 8) von einem U-förmigen Zwischenabschnitt aus Cordfaden (5, 6) gebildet ist und sich durch eine jeweilige Schlaufe (8, 7) erstreckt, die durch einen weiteren Zwischenabschnitt aus Cordfaden (5, 6) gebildet ist, um eine Verbindungsstelle (9) zwischen den genannten beiden Schlaufen (7, 8) zu bilden.

13. Karkasse wie beansprucht in Anspruch 12, dadurch **gekennzeichnet,** daß jede genannte Verbindungsstelle (9) längs der Innenoberfläche der genannten netzartigen Struktur (4) angeordnet ist.

14. Karkasse wie beansprucht in Anspruch 12 oder 13, dadurch **gekennzeichnet,** daß jede genannte Verbindungsstelle (9) dicht an einem entsprechenden genannten Wulst (2) angeordnet ist.

## Revendications

1. Procédé de fabrication d'une carcasse (1) toroïdale de pneu pour véhicule routier comprenant deux talons annulaires (2), et une structure réticulée (4) toroïdale reliant les deux talons (2) et comprenant un certain nombre d'éléments de renforcement allongés entre les talons (2) et s'étendant sensiblement radialement par rapport à ceux-ci; ledit procédé étant caractérisé en ce que lesdits éléments de renforcement allongés sont formés en utilisant au moins un câble continu (5, 6) enroulé dans une première et deuxième série continue de boucles en forme de U, orientées à l'opposé, (7, 8), et en reliant les boucles (7, 8) dans lesdites deux séries, de façon à tisser ladite structure réticulée (4) toroïdale sensiblement tubulaire renfermant les deux talons (2).

2. Procédé selon la revendication 1, caractérisé en ce que deux câbles continus (5, 6) sont utilisés; chacune desdites séries continues de boucles (7, 8) étant produite en enroulant ledit câble continu respectif (5, 6).

3. Procédé selon la revendication 1 ou 2, caractérisé en ce qu'il comprend une phase initiale consistant à former un cadre (12) supportant ladite carcasse (1); ledit cadre (12) comprenant une partie intérieure (13) définie par lesdits deux talons (2) et formant l'ossature de ladite carcasse (1), et une partie extérieure (14) auxiliaire amovible entre les talons (2) et radialement vers l'extérieur par rapport à ceux-ci; ladite structure réticulée (4) étant tissée autour des deux talons (2) et ladite partie extérieure (14) auxiliaire amovible.

4. Procédé selon la revendication 3, caractérisé en ce que les boucles (7, 8) dans lesdites deux séries sont reliées en insérant chaque boucle (7, 8) dans chaque série à travers une boucle respective (8, 7) dans l'autre série.

5. Procédé selon la revendication 4, caractérisé en ce que chaque boucle (7, 8) est formée en insérant une partie intermédiaire en forme de U d'un câble (5, 6) à travers une boucle respective (8, 7) formée à partir une autre partie intermédiaire d'un câble (5, 6), de façon à former une liaison (9) entre lesdites deux boucles (7, 8) et produire une structure réticulée (4) de type "bouclé".

6. Procédé selon la revendication 5, caractérisé en ce que ladite liaison (9) est formée à l'intérieur dudit cadre (12).

7. Procédé selon la revendication 6, caractérisé en ce que chacune desdites liaisons (9) est formée à proximité dudit talon respectif (2).

8. Procédé selon l'une quelconque des revendications précédentes 3 à 7, caractérisé en ce que lesdites parties intérieure (13) et extérieure (14) définissent deux ouvertures annulaires (15); chacune desdites boucles (7, 8) comprenant une première (10) et deuxième (11) partie; ladite première partie (10) comprenant deux branches sensiblement parallèles, et étant enroulée, comme une boucle respective (8, 7) dans l'autre série, vers l'extérieur autour d'un talon (2) respectif et d'une ouverture extérieure parmi lesdites ouvertures (15); ladite deuxième partie (11) étant une partie d'extrémité en forme de U, qui est enroulée en direction de l'autre talon (2) et à travers ladite autre ouverture (15).

9. Carcasse (1) toroïdale de pneu pour véhicule routier comprenant deux talons annulaires (2), et une structure réticulée (4) reliant les deux talons (2), et comprenant à son tour un certain nombre d'éléments de renforcement s'étendant entre les talons (2) et sensiblement radialement par rapport à ceux-ci; caractérisée en ce que lesdits éléments de renforcement allongés sont formés à partir d'au moins un câble continu (5, 6) enroulé dans une première et deuxième série continue de boucles en forme de U, orientées à l'opposé (7, 8), chacune reliée à une boucle respective (7, 8) dans l'autre série pour tisser ladite structure réticulée (4) toroïdale sensiblement tubulaire renfermant les deux talons (2).

10. Carcasse selon la revendication 9, caractérisée en ce que lesdits éléments de renforcement allongés sont formés à partir d'au moins deux câbles continus, chacun enroulé dans une série respective parmi lesdites séries continues de boucles (7, 8).

11. Carcasse selon la revendication 9 ou 10, caractérisée en ce que chaque boucle (7, 8) dans chaque série est insérée à travers une boucle respective (8, 7) dans l'autre série.

12. Carcasse selon la revendication 11, caractérisée en ce que ladite structure réticulée (4) est une structure de type "bouclé"; chaque boucle (7, 8) étant définie par une partie intermédiaire en forme de U d'un câble (5, 6) et s'étendant à travers une boucle respective (8, 7) définie par une autre partie intermédiaire d'un câble (5, 6), de façon à former une liaison (9) entre lesdites deux boucles (7, 8).

13. Carcasse selon la revendication 12, caractérisée en ce que chacune desdites liaisons (9) est située le long de la surface intérieure de ladite structure réticulée (4).

14. Carcasse selon la revendication 12 ou 13, caractérisée en ce que chacune desdites liaisons (9) est située à proximité dudit talon respectif (2).
